# EUROPÄISCHE PATENTSCHRIFT

(11) **EP 2 704 370 B1**
(45) Veröffentlichungstag und Bekanntmachung des Hinweises auf die Patenterteilung: **07.02.2018**
(21) Anmeldenummer: 12182594.7
(22) Anmeldetag: 31.08.2012
(51) Int. Cl.: H04L 12/715, H04L 12/721, H04L 12/46, G05B 19/042, G05B 19/418, H04L 12/42, H04L 12/70, H04L 12/24, H04L 1/22, H04L 12/40, H04L 12/437, H04L 12/703, H04L 12/707, H04L 12/753

(54) **Verfahren zur Nachrichtenübermittlung in einem redundant betreibbaren industriellen Kommunikationsnetz und Kommunikationsgerät für ein redundant betreibbares industrielles Kommunikationsnetz**
Method for message transmission in a redundant industrial communication network and communication device for a redundant industrial communication network
Procédé de transmission de nouvelles dans un réseau de communication industriel pouvant fonctionner de manière redondante et appareil de communication pour un réseau de communication industriel pouvant fonctionner de manière redondante

(43) Veröffentlichungstag der Anmeldung: 05.03.2014
(73) Patentinhaber: Siemens Aktiengesellschaft, 80333 München (DE)
(72) Erfinder: Dilger, Marco, 77830 Bühlertal (DE)

(56) Entgegenhaltungen:
- WO-A1-00/57288
- WO-A1-2008/119649
- US-A1- 2009 109 841

## Beschreibung

Ein industrielles Automatisierungssystem umfaßt üblicherweise eine Vielzahl von über ein industrielles Kommunikationsnetz miteinander vernetzten Automatisierungsgeräten und dient im Rahmen einer Fertigungs- oder Prozeßautomatisierung zur Steuerung oder Regelung von Anlagen, Maschinen bzw. Geräten. Aufgrund zeitkritischer Rahmenbedingungen in mittels industrieller Automatisierungssysteme automatisierten technischen Systemen werden in industriellen Kommunikationsnetzen zur Kommunikation zwischen Automatisierungsgeräten überwiegend Echzeit-Kommunikationsprotokolle, wie Profinet, Profibus oder Real-Time-Ethernet, verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Um Ausfälle von Kommunikationsverbindungen oder -geräten kompensieren zu können, sind Kommunikationsprotokolle, wie Media Redundancy Protocol, High-availability Seamless Redundancy oder Parallel Redundancy Protocol, für hochverfügbare, redundant betreibbare in industriellen Kommunikationsnetze entwickelt worden. Media Redundancy Protocol (MSR) ist im Standard IEC 62439 definiert und ermöglicht eine Kompensation einzelner Verbindungsausfälle in Netzwerken mit einfacher Ringtopologie bei stoßbehafteter redundanter Übertragung von Datenpaketen. Entsprechend Media Redundancy Protocol ist einem Switch mit zwei Ports innerhalb der Ringtopologie ein Redundanz-Manager zugeordnet, der das Netzwerk auf Verbindungsausfälle überwacht und ggf. eine Schaltmaßnahme für einen Ringschluß einleitet. In normalen Betriebszustand prüft der Redundanz-Manager anhand von Test-Datenpaketen, ob innerhalb der Ringtopologie eine Unterbrechung aufgetreten ist. Datenpakete mit Nutzdaten leitet der dem Redundanz-Manager zugeordnet Switch normalerweise jedoch nicht von einem Port an den anderen Port weiter. Somit wird verhindert, daß Datenpakete mit Nutzdaten permanent innerhalb der Ringtopologie zirkulieren. Fällt innerhalb der Ringtopologie ein Switch oder eine Verbindung aus, werden von einem Port ausgesendeten Test-Datenpakete nicht mehr am jeweils anderen Port empfangen. Anhand dessen kann der Redundanz-Manager einen Ausfall erkennen und leitet bei einem Ausfall Datenpakete mit Nutzdaten im Unterschied zum normalen Betriebszustand von einem Port an den anderen Port und umgekehrt weiter. Darüber hinaus veranlaßt der Redundanz-Manager eine Benachrichtigung der übrigen Switches über eine Ausfall-bedingte Topologieänderung. Auf diese Weise wird vermieden, daß Datenpakete über die ausgefallene Verbindung übermittelt werden.

Stoßbehaftete Medienredundanzverfahren lassen sich grundsätzlich mit relativ geringem Aufwand realisieren. Nachteilig ist jedoch, daß einerseits Nachrichten im Fehlerfall verloren gehen können und andererseits während einer Rekonfiguration eines Kommunikationsnetzes zunächst ein Störungszustand vorliegt. Ein derartiger Störungszustand muß durch ein überlagertes Kommunikationsprotokoll, beispielsweise mittels TCP/IP auf Vermittlungs- bzw. Transportschichtebene, gesichert werden, um eine Unterbrechung einer Kommunikationsverbindung zu vermeiden.

Auch PROFINET (IEC 61158 Type 10) referenziert Media Redundancy Protocol als stoßbehaftetes Medienredundanzverfahren innerhalb eines Kommunikationsnetzes mit Ringtopologie. Media Redundancy Planned Duplication (MRPD) stellt demgegenüber eine Erweiterung für eine stoßfreie Übertragung von isochronen Echtzeitdaten. Bei Media Redundancy Planned Duplication handelt es sich jedoch nicht um ein anwendungsneutrales stoßfreies Medienredundanzverfahren, sondern um eine PROFINETspezifische Erweiterung.

High-availability Seamless Redundancy (HSR) und Parallel Redundancy Protocol (PRP) sind im Standard IEC 62439-3 definiert und ermöglichen eine stoßfreie redundante Übertragung von Datenpaketen mit äußerst geringen Erholungszeiten. Entsprechend High-availability Seamless Redundancy und Parallel Redundancy Protocol wird jedes Datenpaket von einer sendenden Kommunikationsgerät dupliziert und auf zwei verschiedenen Wegen zu einem Empfänger geschickt. Durch ein empfängerseitiges Kommunikationsgerät werden Duplikate darstellende redundante Datenpakete aus einem empfangenen Datenstrom ausgefiltert.

Aus WO 2008/119649 A1 ist ein Verfahren zum Rekonfigurieren eines paketvermittelten Kommunikationsnetzes bekannt, das ein erstes Teilnetz und ein zweites Teilnetz umfaßt. Während im ersten Teilnetz ein erstes Netzprotokoll verwendet wird, wird im zweiten Teilnetz ein vom ersten Netzprotokoll verschiedenes zweites Netzprotokoll verwendet. Beide Teilnetze sind durch wenigstens drei redundante Datenlinks miteinander verbunden, von denen jeweils nur einer zum Nutzdatenaustausch aktiviert ist. Dabei ist ein Master-Datenlink voreingestellt aktiviert, während mindestens zwei Slave-Datenlinks voreingestellt inaktiviert sind. Durch eine mit dem Master-Datenlink verbundene Master-Brücke des zweiten Teilnetzes wird ein Ausfall des Master-Datenlinks oder eines Slave-Datenlinks überwacht. Bei einem solchen Ausfall generiert die Master-Brücke ein erstes Datenpaket und überträgt dies an eine mit einem Slave-Datenlink verbundene Slave-Brücke des zweiten Teilnetzes. Die Slave-Brücke wird gemäß einer vorgebbaren Auswahlregel durch die Master-Brücke ausgewählt. Anschließend wird das erste Datenpaket durch die gewählte Slave-Brücke verarbeitet. Das erste Datenpaket umfaßt logische Informationen, anhand derer eine zumindest teilweise Ausführung des ersten Netzprotokolls auf einem mit dem Slave-Datenlink verbundenen Port der Slave-Brücke und eine Aktivierung des Slave-Datenlinks durch das auf dem Port der Slave-Brücke ausgeführte erste Netzprotokoll erfolgt.

In EP 2 343 857 A1 ist ein Netzknoten für ein Kommunikationsnetz beschrieben, das ein erstes Teilnetz und ein mit diesem verbundenes zweites Teilnetz umfaßt. Während im ersten Teilnetz ein Spannbaum-Protokoll verwendet wird, wird im zweiten Teilnetz ein sich vom Protokoll des ersten Teilnetzes unterscheidendes zweites Protokoll verwendet. Der Netzknoten ist als ein Element für das zweite Teilnetz eingerichtet und zur Kommunikation innerhalb des zweiten Teilnetzes ausgebildet.

Darüber hinaus ist der Netzknoten mittels einer Spannbaum-Funktionalität als ein Spannbaum-Hauptknoten zur Überwachung und Steuerung des zweiten Teilnetzes ausgebildet und eingerichtet. Damit kann das zweite Teilnetz vom im ersten Teilnetz verwendeten Spannbaum-Protokoll als ein virtueller Netzknoten behandelt werden, indem der Netzknoten als Spannbaum-Hauptknoten für andere Netzknoten des zweiten Teilnetzes eine Spannbaum-Protokoll-Anwendung vornimmt.

Aus WO 2010/105828 A1 ist ein Verfahren zum Betreiben eines Kommunikationsnetzes mit Redudanz-Eigenschaften bekannt, das eine Ring-Netztopologie aufweist. Innerhalb des Kommunikationsnetzes sind Kommunikationsgeräte mit ihren Datenports über Datenleitungen miteinander verbunden und tauschen auf Basis von Kommunikationsprotokollen Steuerungsdaten sowie Nutzdaten über die Datenleitungen aus. Um ein endloses Kreisen von Nachrichten in Maschen des Kommunikationsnetzes zu vermeiden, wird mittels der Kommunikationsprotokolle eine Übermittlung von Nachrichten über ausgewählte Datenports einzelner Kommunikationsgeräte mit Ausnahme von Nachrichten zur Steuerung bzw. Überwachung von Medienredundanz unterbunden. Innerhalb des Kommunikationsnetzes werden zwei unterschiedliche Kommunikationsprotokolle parallel zueinander in den Kommunikationsgeräten angewendet. Eine parallele Anwendung der unterschiedliche Kommunikationsprotokolle wird beispielsweise dadurch erzielt, eine Kontrolle über zu blockierende Datenports einem einzelnen Kommunikationsprotokoll zugewiesen wird. Alternativ dazu können für die Kommunikationsprotokolle derart Parameter gewählt werden, daß durch ein erstes Kommunikationsprotokoll keine Verbindungen blockiert werden, die entsprechend einem zweiten Kommunikationsprotokoll als aktiv gelten.

In der älteren europäischen Patentanmeldung mit dem Anmeldeaktenzeichen 12177233.9 ist ein Verfahren zur Nachrichtenübermittlung in einem redundant betreibbaren Kommunikationsnetz beschrieben, das ein erstes Teilnetz mit Baumtopologie und ein zweites Teilnetz umfaßt. Im ersten Teilnetz werden Nachrichten entsprechend einem Spannbaum-Protokoll übermittelt. Dabei tauschen Netzknoten des ersten Teilnetzes zugeordnete Kommunikationsgeräte zur Bildung einer Baumtopologie untereinander Nachrichten mit Topologieinformationen aus. Im zweiten Teilnetz werden Nachrichten entsprechend einem Parallel- oder Ringredundanz-Protokoll übermittelt. Netzknoten des zweiten Teilnetzes zugeordnete Kommunikationsgeräte tauschen untereinander Nachrichten mit Topologieinformationen des ersten Teilnetzes untereinander entsprechend dem Parallel- oder Ringredundanz-Protokoll aus und vergleichen diese mit lokal vorliegenden Topologieinformationen des ersten Teilnetzes. In Abhängigkeit von einem Vergleichsergebnis ermitteln die Netzknoten des zweiten Teilnetzes zugeordneten Kommunikationsgeräte resultierende Topologieinformationen des ersten Teilnetzes.

Aus der älteren europäischen Patentanmeldung mit dem Anmeldeaktenzeichen 12178677.6 ist ein Verfahren zur Nachrichtenübermittlung in einem redundant betreibbaren Kommunikationsnetz bekannt, das ein erstes Teilnetz mit Baumtopologie und ein zweites Teilnetz umfaßt. Im ersten Teilnetz werden Nachrichten entsprechend einem Spannbaum-Protokoll übermittelt. Dabei tauschen Netzknoten des ersten Teilnetzes zugeordnete Kommunikationsgeräte zur Bildung einer Baumtopologie untereinander Nachrichten mit Topologieinformationen aus. Im zweiten Teilnetz werden Nachrichten entsprechend einem Parallel- oder Ringredundanz-Protokoll übermittelt. Als Wurzel-Netzknoten des ersten Teilnetzes wird ein virtueller Netzknoten konfiguriert, der über jeweils eine virtuelle nicht durch einen Fehler unterbrechbare Verbindung mit sämtlichen Netzknoten des zweiten Teilnetzes verbunden ist.

In US 2009/109841 A1 ist ein Koppelgerät für ein Kommunikationsnetz bekannt, das Teilnetze miteinander verbindet, in denen unterschiedliche Redundanzprotokolle verwendet werden. Das Koppelgerät steuert ein Redundanzprotokoll eines unterlagerten Teilnetzes über virtuelle Anschlüsse und Verbindungen, um das unterlagerte Teilnetz redundant an ein überlagertes Teilnetz anzubinden. Sobald Kommunikationsrouten im unterlagerten Teilnetz geändert werden, erfolgt ein Löschen gelernter MAC-Adressen des überlagerten Teilnetzes, um mit hoher Geschwindigkeit Kommunikationsrouten zu switchen.

Der vorliegenden Erfindung liegt die Aufgabe zugrunde, ein Verfahren zur Nachrichtenübermittlung in einem redundant betreibbaren industriellen Kommunikationsnetz mit zumindest einem Spannbaum-Teilnetz und einem Parallel- oder Ringredundanz-Teilnetz anzugeben, das einerseits eine zuverlässige Separierung zwischen beiden Teilnetzen und andererseits eine gegenseitige Erreichbarkeit zwischen beiden Teilnetzen ermöglicht, sowie ein zur Durchführung des Verfahrens geeignetes Kommunikationsgerät zu schaffen.

Diese Aufgabe wird erfindungsgemäß durch ein Verfahren mit den in Anspruch 1 angegebenen Merkmalen sowie durch ein Kommunikationsgerät mit den in Anspruch 14 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren werden Nachrichten in einem ersten Teilnetz mit Baumtopologie entsprechend einem Spannbaum-Protokoll übermittelt. Dabei tauschen Netzknoten des ersten Teilnetzes zugeordnete Kommunikationsgeräte zur Bildung einer Baumtopologie untereinander Nachrichten mit Topologieinformationen aus. Anhand der ausgetauschten Topologieinformationen wird ein Wurzel-Netzknoten als Basiselement einer Baumtopologie durch die den Netzknoten des ersten Teilnetzes zugeordneten Kommunikationsgeräte ermittelt. Vom Wurzel-Netzknoten ausgehend werden schleifenfreie Verbindungen zu den übrigen Netzknoten des ersten Teilnetzes aufgebaut. In einem zweiten Teilnetz werden Nachrichten entsprechend einem Parallel- oder Ringredundanz-Protokoll übermittelt. Das erste und zweite Teilnetz sind über eine Mehrzahl von Kommunikationsgeräten miteinander gekoppelt. Die den Netzknoten des er sten bzw. zweiten Teilnetzes zugeordneten Kommunikationsgeräte sind vorzugsweise Switches oder Bridges.

Beim Spannbaum-Protokoll handelt es sich erfindungsgemäß um das Spanning Tree Protocol entsprechend IEEE 802.1d, Rapid Spanning Tree Protocol entsprechend IEEE 802.1D-2004, Clause 17 "Rapid Spanning Tree Protocol (RSTP)" oder Multiple Spanning Tree Protocol entsprechend IEEE 802.1Q-2011, Clause 13 "Spanning Tree Protocols". Die Nachrichten mit Topologieinformationen des ersten Teilnetzes sind Bridge Protocol Data Units (BPDU) bzw. umfassen jeweils einen Port Priority Vector, der unter den Netzknoten des zweiten Teilnetzes zugeordneten Kommunikationsgeräten ausgetauscht und abgeglichen wird.

Erfindungsgemäß werden für die das erste und das zweite Teilnetz koppelnden Kommunikationsgeräte eine erste und eine zweite Anschlußgruppe eingerichtet. Dabei werden Kommunikationsgeräteanschlüsse der ersten Anschlußgruppe für eine Nachrichtenübermittlung entsprechend dem Spannbaum-Protokoll innerhalb des ersten Teilnetzes verwendet, während Kommunikationsgeräteanschlüsse der zweiten Anschlußgruppe für eine Nachrichtenübermittlung entsprechend dem Parallel- oder Ringredundanz-Protokoll innerhalb des zweiten Teilnetzes verwendet werden. Die erste und die zweite Anschlußgruppe können vorzugsweise jeweils durch Bildung einen lokalen virtuellen Netzes eingerichtet werden. Innerhalb eines das erste und das zweite Teilnetz koppelnden Kommunikationsgeräts werden die Kommunikationsgeräteanschlüsse der zweiten Anschlußgruppe erfindungsgemäß mit einem Kommunikationsgeräteanschluß der ersten Anschlußgruppe verbunden, der für eine Kommunikationsverbindung zum Wurzel-Netzknoten des ersten Teilnetzes unter den Kommunikationsgeräteanschlüssen der ersten Anschlußgruppe die geringsten Pfadkosten aufweist.

Das erfindungsgemäße Verfahren kann auf einfache Weise in bestehende Switches oder Router integriert und ermöglicht einerseits eine zuverlässige Separierung der Teilnetze, ohne daß dies zu Lasten einer gegenseitige Erreichbarkeit zwischen dem zumindest einen ersten Teilnetz und dem zweiten teilnetz führt. Insgesamt ermöglicht daß erfindungsgemäße Verfahren eine hohe Verfügbarkeit in einem industriellen Kommunikationsnetz, insbesondere durch geringe Umschaltzeiten bei Netzrekonfigurationen.

Vorzugsweise werden innerhalb eines das erste und das zweite Teilnetz koppelnden Kommunikationsgeräts nur die Kommunikationsgeräteanschlüsse der zweiten Anschlußgruppe mit dem Kommunikationsgeräteanschluß der ersten Anschlußgruppe verbunden, die sich in einem Zustand befinden, in dem empfangene Nachrichten innerhalb des zweiten Teilnetzes weitergeleitet werden. Entsprechend einer weiteren vorteilhaften Ausgestaltung des erfindungsgemäßen Verfahrens werden innerhalb eines das erste und das zweite Teilnetz koppelnden Kommunikationsgeräts die Kommunikationsgeräteanschlüsse der zweiten Anschlußgruppe mit einem Kommunikationsgeräteanschluß verbunden, an dem lediglich ein Kommunikationsendgerät angeschlossen ist. Dabei reicht es aus, wenn innerhalb eines das erste und das zweite Teilnetz koppelnden Kommunikationsgeräts nur die Kommunikationsgeräteanschlüsse der zweiten Anschlußgruppe mit dem Kommunikationsgeräteanschluß für das Kommunikationsendgerät verbunden werden, die sich in einem Zustand befinden, in dem empfangene Nachrichten innerhalb des zweiten Teilnetzes weitergeleitet werden. Dies ermöglicht eine besonders effiziente Realisierung eines Verfahrens zur Nachrichtenübermittlung in einem redundant betreibbaren industriellen Kommunikationsnetz.

Ein Ausfall eines einem Netzknoten des zweiten Teilnetzes zugeordneten Kommunikationsgeräteanschlusses oder einer Verbindung zwischen zwei Netzknoten des zweiten Teilnetzes wird vorteilhafterweise ausschließlich entsprechend dem Parallel- oder Ringredundanz-Protokoll behandelt. Topologische Änderungen im zweiten Teilnetz haben somit grundsätzlich keine Auswirkungen auf Konfiguration und Betrieb des ersten Teilnetzes. Insbesondere Fehler oder Störungen im zweiten Teilnetz können schnell auf Basis des dort verwendeten Parallel- bzw. Ringredundanz-Protokolls behandelt werden. Eine damit verbundene Rekonfiguration des zweiten Teilnetzes hat im wesentlichen keine Auswirkung auf das erste Teilnetz.

Entsprechend einer weiteren Ausgestaltung der vorliegenden Erfindung kann ein weiteres erstes Teilnetz mit Baumtopologie vorgesehen sein, innerhalb dessen Nachrichten entsprechend einem Spannbaum-Protokoll übermittelt werden. Dabei sind das weitere erste und das zweite Teilnetz über eine Mehrzahl von Kommunikationsgeräten miteinander gekoppelt sind. Für die das weitere erste und zweite Teilnetz koppelnden Kommunikationsgeräte wird außerdem eine weitere Anschlußgruppe eingerichtet. Dabei werden Kommunikationsgeräteanschlüsse der weiteren Anschlußgruppe für eine Nachrichtenübermittlung entsprechend dem Spannbaum-Protokoll innerhalb des weiteren ersten Teilnetzes verwendet. Innerhalb eines das weitere erste und das zweite Teilnetz koppelnden Kommunikationsgeräts werden die Kommunikationsgeräteanschlüsse der zweiten Anschlußgruppe mit einem Kommunikationsgeräteanschluß der weiteren Anschlußgruppe verbunden, der für eine Kommunikationsverbindung zum Wurzel-Netzknoten des weiteren ersten Teilnetzes unter den Kommunikationsgeräteanschlüssen der weiteren Anschlußgruppe die geringsten Pfadkosten aufweist. Diese Vorgehensweise läßt sich grundsätzlich für eine beliebige Anzahl erster Teilnetze mit Baumtopologie fortsetzen. Somit können große über ein Parallel- oder Ringredundanz-Teilnetz gekoppelte Spannbaum-Teilnetze realisiert werden.

Netzknoten des zweiten Teilnetzes zugeordnete Kommunikationsgeräte tauschen vorzugsweise untereinander Nachrichten mit Topologieinformationen des zumindest einen ersten Teilnetzes untereinander entsprechend dem Parallel- oder Ringredundanz-Protokoll aus und vergleichen diese mit lokal vorliegenden Topologieinformationen des ersten Teilnetzes. In Abhängigkeit von einem Vergleichsergebnis ermitteln die Netzknoten des zweiten Teilnetzes zugeordneten Kommunikationsgeräte resultierende Topologieinformationen des ersten Teilnetzes. Außerdem können die den Netzknoten des zweiten Teilnetzes zugeordneten Kommunikationsgeräte anhand der ermittelten resultierenden Topologieinformationen des ersten Teilnetzes ihre Konfiguration hinsichtlich geschlossener bzw. geöffneter Verbindungen zum ersten Teilnetz anpassen. Entsprechend einer weiteren Ausgestaltung des erfindungsgemäßen Verfahrens werden Nachrichten zwischen dem zweiten Teilnetz zugeordneten Kommunikationsgeräteanschlüssen ausschließlich entsprechend dem Parallel- oder Ringredundanz-Protokoll übermittelt. Somit muß für das zweite Teilnetz keine Baumtopologie mittels eines Spannbaum-Protokolls gebildet werden. Dies trägt entscheidend zu einer schnellen Aktivierung von Ersatz-Verbindungen nach Geräte- oder Verbindungsausfällen bei. Darüber hinaus werden das Spannbaum-Protokoll und das Parallel- oder Ringredundanz-Protokoll im jeweiligen Teilnetz im wesentlichen entkoppelt voneinander angewendet. Des weiteren können die Pfadkosten zum jeweiligen Wurzel-Netzknoten des zumindest einen ersten Teilnetzes auf einfache Weise anhand der resultierenden Topologieinformationen ermittelt werden.

Entsprechend einer bevorzugten Ausgestaltung des erfindungsgemäßen Verfahrens umfassen die Topologieinformationen des zumindest einen ersten Teilnetzes Angaben zu bestehenden Verbindungen zwischen Netzknoten des zumindest einen ersten Teilnetzes. Vom Wurzel-Netzknoten ausgehende schleifenfreie Verbindungen zu den übrigen Netzknoten des zumindest einen ersten Teilnetzes können somit schnell anhand einer Ermittlung minimaler Pfadkosten zum Wurzel-Netzknoten aufgebaut werden.

Das Parallel- oder Ringredundanz-Protokoll ist erfindungsgemäß das Parallel Redundancy Protocol entsprechend IEC 62439-3, Clause 4, High-availability Seamless Redundancy-Protokoll entsprechend IEC 62439-3, Clause 5 oder Media Redundancy Protocol entsprechend IEC 62439.

Bei Verwendung des Media Redundancy Protocol als Ringredundanz-Protokoll entsprechend einer weiteren vorteilhaften Ausgestaltung der vorliegenden Erfindung ist im zweiten Teilnetz ein Kommunikationsgerät als Überwachungs- und Steuerungseinheit konfiguriert. Das zweite Teilnetz weist in diesem Fall eine Ringtopologie auf. Die Überwachungs- und Steuerungseinheit detektiert eine Unterbrechung innerhalb der Ringtopologie anhand versendeter Test-Datenpakete und steuert eine Weiterleitung von Datenpaketen mit Nutzdaten, die an einen ersten Anschluß des als Überwachungs- und Steuerungseinheit konfigurierten Kommunikationsgeräts gerichtet sind, an einen zweiten Anschluß dieses Kommunikationsgeräts.

Das erfindungsgemäße Kommunikationsgerät ist für ein redundant betreibbares industrielles Kommunikationsnetz vorgesehen und geeignet, das zumindest ein erstes Teilnetz mit Baumtopologie sowie Nachrichtenübermittlung entsprechend einem Spannbaum-Protokoll, ein zweites Teilnetz sowie Nachrichtenübermittlung entsprechend einem Parallel- oder Ringredundanz-Protokoll und eine Mehrzahl beide Teilnetze koppelnder Kommunikationsgeräte umfaßt. Als Mittel zur Nachrichtenübermittlung innerhalb des zumindest einen ersten Teilnetzes entsprechend dem Spannbaum-Protokoll ist beispielsweise eine Sende- und Empfangseinheit vorgesehen. Zusätzlich umfaßt das erfindungsgemäße Kommunikationsgerät Mitteln zum Austausch von Topologieinformationen innerhalb des ersten Teilnetzes zur Bildung einer Baumtopologie. Dabei sind die Topologieinformationen für eine Ermittlung eines Wurzel-Netzknotens als Basis element der Baumtopologie vorgesehen. Der Wurzel-Netzknoten bildet einen Ausgangspunkt für einen Aufbau schleifenfreier Verbindungen zu den übrigen Netzknoten des ersten Teilnetzes.

Beim Spannbaum-Protokoll handelt es sich erfindungsgemäß um das Spanning Tree Protocol entsprechend IEEE 802.1d, Rapid Spanning Tree Protocol entsprechend IEEE 802.1D-2004, Clause 17 "Rapid Spanning Tree Protocol (RSTP)" oder Multiple Spanning Tree Protocol entsprechend IEEE 802.1Q-2011, Clause 13 "Spanning Tree Protocols". Die Nachrichten mit Topologieinformationen des ersten Teilnetzes sind Bridge Protocol Data Units (BPDU) bzw. umfassen jeweils einen Port Priority Vector, der unter den Netzknoten des zweiten Teilnetzes zugeordneten Kommunikationsgeräten ausgetauscht und abgeglichen wird.

Als Mittel zur Nachrichtenübermittlung innerhalb des zweiten Teilnetzes entsprechend dem Parallel- oder Ringredundanz-Protokoll umfaßt das erfindungsgemäße Kommunikationsgerät beispielsweise eine erste und zweite Sende- und Empfangseinheit, eine Signalverarbeitungseinheit mit einer Multiplexereinheit und einer Redundanzbehandlungseinheit sowie ein mit der Signalverarbeitungseinheit verbundenes Koppelelement vorgesehen. Das Koppelelement ist vorzugsweise ein Hochgeschwindigkeitsbus, über den beispielsweise einfach angebundene Netzknoten oder redundanzfreie Teilnetze mit der Signalverarbeitungseinheit verbunden sein können. Insbesondere kann das Koppelelement ein Backplane Switch mit zugeordnetem Controller sein. Alternativ hierzu kann das Koppelelement grundsätzlich auch mittels eines Matrix-Schaltnetzes realisiert sein. Die Signalverarbeitungseinheit ist vorzugsweise mittels eines Field Programmable Gate Arrays (FPGA) realisiert.

Außerdem umfaßt das erfindungsgemäße Kommunikationsgerät Mittel zur Einrichtung zumindest einer ersten und einer zweiten Anschlußgruppe für das erste und das zweite Teilnetz. Dabei sind Kommunikationsgeräteanschlüsse der ersten Anschlußgruppe für eine Nachrichtenübermittlung entsprechend dem Spannbaum-Protokoll innerhalb des ersten Teilnetzes vorgesehen, während Kommunikationsgeräteanschlüsse der zweiten Anschlußgruppe für eine Nachrichtenübermittlung entsprechend dem Parallel- oder Ringredundanz-Protokoll innerhalb des zweiten Teilnetzes vorgesehen sind. Diese Mittel können beispielsweise durch einen dem Koppelelement zugeordneten Controller realisiert sein. Zusätzlich sind Mittel zur Verbindung der Kommunikationsgeräteanschlüsse der zweiten Anschlußgruppe mit einem Kommunikationsgeräteanschluß der ersten Anschlußgruppe vorgesehen, der für eine Kommunikationsverbindung zum Wurzel-Netzknoten des ersten Teilnetzes unter den Kommunikationsgeräteanschlüssen der ersten Anschlußgruppe die geringsten Pfadkosten aufweist. Diese Mittel können ebenfalls durch einen dem Koppelelement zugeordneten Controller realisiert sein. Insgesamt ermöglicht das erfindungsgemäße Kommunikationsgerät deutlich reduzierte Recovery-Zeiten nach Geräte- oder Verbindungsausfällen.

Vorteilhafterweise kann das Kommunikationsgerät derart eingerichtet und ausgestaltet sein, daß nur die Kommunikationsgeräteanschlüsse der zweiten Anschlußgruppe mit dem Kommunikationsgeräteanschluß der ersten Anschlußgruppe verbunden werden, die sich in einem Zustand befinden, in dem empfangene Nachrichten innerhalb des zweiten Teilnetzes weitergeleitet werden. Zusätzlich kann das Kommunikationsgerät derart eingerichtet und ausgestaltet sein, daß die Kommunikationsgeräteanschlüsse der zweiten Anschlußgruppe mit einem Kommunikationsgeräteanschluß verbunden werden, an dem lediglich ein Kommunikationsendgerät angeschlossen ist. Darüber hinaus kann das Kommunikationsgerät derart eingerichtet und ausgestaltet sein, daß nur die Kommunikationsgeräteanschlüsse der zweiten Anschlußgruppe mit dem Kommunikationsgeräteanschluß für das Kommunikationsendgerät verbunden werden, die sich in einem Zustand befinden, in dem empfangene Nachrichten innerhalb des zweiten Teilnetzes weitergeleitet werden. In diesen Fall ist das Kommunikationsgerät vorzugsweise derart eingerichtet und ausgestaltet, daß die erste und die zweite Anschlußgruppe jeweils durch Bildung einen lokalen virtuellen Netzes eingerichtet werden. Dies ermöglicht eine besonders einfache Realisierung eines Kommunikationsgerät ist für ein redundant betreibbares industrielles Kommunikationsnetz.

Entsprechend einer besonders bevorzugten Ausgestaltung des erfindungsgemäßen Kommunikationsgeräts sind Mittel zur Behandlung eines Ausfalls eines einem Netzknoten des zweiten Teilnetzes zugeordneten Kommunikationsgeräteanschlusses oder einer Verbindung zwischen zwei Netzknoten des zweiten Teilnetzes ausschließlich entsprechend dem Parallel- oder Ringredundanz-Protokoll vorgesehen. Die Mittel zur Behandlung eines Ausfalls eines einem Netzknoten des zweiten Teilnetzes zugeordneten Kommunikationsgerätes oder einer Verbindung zwischen zwei Netzknoten des zweiten Teilnetzes sind vorzugsweise durch die der Signalverarbeitungseinheit zugeordnete Redundanzbehandlungseinheit gebildet.

Entsprechend einer vorteilhaften Weiterbildung umfaßt das erfindungsgemäße Kommunikationsgerät Mittel zum Austauschen von Nachrichten mit Topologieinformationen des ersten Teilnetzes mit Netzknoten des zweiten Teilnetzes zugeordneten weiteren Kommunikationsgeräten entsprechend dem Parallel- oder Ringredundanz-Protokoll. Diese Mittel können beispielsweise durch die erste und zweite Sende- und Empfangseinheit, die Signalverarbeitungseinheit, das Koppelelement und einen der Signalverarbeitungseinheit zugeordneten Protokoll-Wrapper realisiert sein. Zusätzlich sind vorzugsweise Mittel zum Vergleichen von ausgetauschten Nachrichten mit Topologieinformationen des ersten Teilnetzes mit lokal vorliegenden Topologieinformationen des ersten Teilnetzes und zum Ermitteln von resultierenden Topologieinformationen des ersten Teilnetzes in Abhängigkeit von einem Vergleichsergebnis vorgesehen. Diese Mittel können beispielsweise durch die Signalverarbeitungseinheit realisiert sein.

Darüber hinaus kann das erfindungsgemäße Kommunikationsgerät entsprechend einer bevorzugten Weiterbildung Mittel zu seiner Konfigurationsanpassung hinsichtlich geschlossener bzw. geöffneter Verbindungen zum ersten Teilnetz anhand der ermittelten resultierenden Topologieinformationen des ersten Teilnetzes umfassen. Diese Mittel können beispielsweise durch einen Controller des Koppelelements realisiert sein. Vorzugsweise ist das Kommunikationsgerät für eine Nachrichtübermittlung innerhalb des zweiten Teilnetzes ausschließlich entsprechend dem Parallel- oder Ringredundanz-Protokoll eingerichtet. Daher können das Spannbaum-Protokoll und das Parallel- oder Ringredundanz-Protokoll im jeweiligen Teilnetz im wesentlichen entkoppelt voneinander angewendet werden.

Entsprechend einer vorteilhaften Weiterbildung ist das Kommunikationsgerät derart eingerichtet und ausgestaltet, daß die Pfadkosten zum jeweiligen Wurzel-Netzknoten des zumindest einen ersten Teilnetzes anhand der resultierenden Topologieinformationen ermittelt werden. Dies ermöglicht eine besonders einfache und schnelle Ermittlung der Pfadkosten.

Die vorliegende Erfindung wird nachfolgend an einem Ausführungsbeispiel anhand der Zeichnung näher erläutert. Es zeigt die
- Figur 1: ein redundant betreibbares industrielles Kommunikationsnetz, das zwei erste Teilnetze mit Baumtopologie und ein zweites Teilnetz mit Ringtopologie umfaßt, in einem fehlerfreien Verbindungszustand,
- Figur 2: das Kommunikationsnetz gemäß Figur 1 in einem Zustand mit einer Topologieänderung in einem der beiden ersten Teilnetze,
- Figur 3: eine schematische Darstellung eines Kommunikationsgerät für ein redundant betreibbares industrielles Kommunikationsnetz.

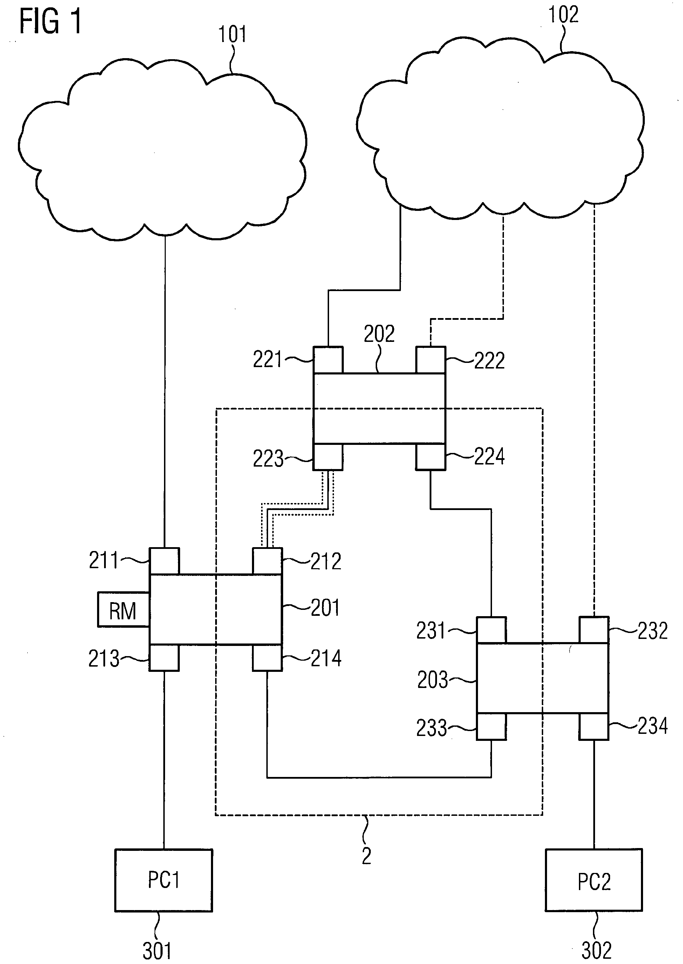

Das in Figur 1 dargestellte industrielle Kommunikationsnetz umfaßt zwei erste Teilnetze 101, 102 mit Baumtopologie sowie Nachrichtenübermittlung entsprechend einem Spannbaum-Protokoll und ein zweites Teilnetz 2 mit Ringtopologie sowie Nachrichtenübermittlung entsprechend einem Ringredundanz-Protokoll. Im vorliegenden Ausführungsbeispiel handelt es sich bei dem Ringredundanz-Protokoll um das Media Redundancy Protocol. Grundsätzlich könnte im zweiten Teilnetz 2 anstelle des Ringredundanz-Protokolls auch ein Parallelredundanz-Protokoll verwendet werden. Nachfolgende Ausführungen gelten für diesen Fall gleichermaßen.

Die beiden ersten Teilnetze 101, 102 und das zweite Teilnetz 2 sind über eine Mehrzahl von Kommunikationsgeräten 201-203 miteinander gekoppelt. Im vorliegenden Ausführungsbeispiel sind zur Vermeidung von Schleifenverbindungen Kommunikationsverbindungen zwischen den Kommunikationsgeräten 201 und 202, zwischen dem Kommunikationsgerät 202 und Teilnetz 102 sowie zwischen dem Kommunikationsgerät 203 und Teilnetz 102 deaktiviert. Deaktivierte Verbindungen sind in den Figuren durch gestrichelte Linien repräsentiert, während durchgezogene Linien aktivierte Verbindungen symbolisieren.

Netzknoten der ersten Teilnetze 101, 102 zugeordnete Kommunikationsgeräte tauschen zur Bildung einer Baumtopologie untereinander Nachrichten mit Topologieinformationen aus und ermitteln anhand der ausgetauschten Topologieinformationen einen Wurzel-Netzknoten für jedes erste Teilnetz 101, 102 als Basiselement einer Baumtopologie. Das Spannbaum-Protokoll ist im vorliegenden Ausführungsbeispiel das Rapid Spanning Tree Protocol. Nachstehende Ausführungen gelten aber gleichermaßen für das Spanning Tree Protocol, das Multiple Spanning Tree Protocol oder vergleichbare Spannbaum-Protokolle.

Die unter den Kommunikationsgeräten der ersten Teilnetze 101, 102 ausgetauschten Nachrichten mit Topologieinformationen der ersten Teilnetze 101, 102 können Bridge Protocol Data Units (BPDU) sein, mittels derer die Kommunikationsgeräte der ersten Teilnetze 101, 102 ihre Portzustände konfigurieren. Durch eine Konfiguration der Portzustände werden insbesondere Verbindungen zwischen Netzknoten aktiviert bzw. deaktiviert. Die Topologieinformationen der ersten Teilnetze 101, 102 umfassen insbesondere Angaben zu bestehenden Verbindungen zwischen Netzknoten der ersten Teilnetze 101, 102 und deren Pfadkosten. Dies gilt auch für Transitverbindungen durch das zweite Teilnetz 2 mit Ringtopologie. Anhand einer Ermittlung minimaler Pfadkosten zum jeweiligen Wurzel-Netzknoten bauen die Kommunikationsgeräte der ersten Teilnetze 101, 102 autonominteragierend vom jeweiligen Wurzel-Netzknoten ausgehende schleifenfreie Verbindungen zu den übrigen Netzknoten des jeweiligen ersten Teilnetzes 101, 102 auf. Nähere Einzelheiten hierzu sind in bezug auf das Rapid Spanning Tree Protocol beispielsweise IEEE 802.1D-2004, Clause 17 "Rapid Spanning Tree Protocol (RSTP)" zu entnehmen.

Für Kommunikationsgeräte 201-203, welche die beiden ersten Teilnetze 101, 102 und das zweite Teilnetz 2 koppeln, werden zwei erste Anschlußgruppen und eine zweite Anschlußgruppe eingerichtet. Dies erfolgt durch Bildung von insgesamt 3 lokalen virtuellen Netzen. Kommunikationsgeräteanschlüsse 211, 221, 222, 232 der beiden ersten Anschlußgruppen werden für eine Nachrichtenübermittlung entsprechend dem Spannbaum-Protokoll innerhalb der beiden ersten Teilnetze 101, 102 verwendet, während Kommunikationsgeräteanschlüsse 212, 214, 223, 224, 231, 233 der zweiten Anschlußgruppe für eine Nachrichtenübermittlung entsprechend dem Parallel- oder Ringredundanz-Protokoll innerhalb des zweiten Teilnetzes 2 verwendet werden. Nachrichten zwischen dem zweiten Teilnetz 2 zugeordneten Kommunikationsgeräteanschlüssen 212, 214, 223, 224, 231, 233 werden im vorliegenden Ausführungsbeispiel ausschließlich entsprechend dem Parallel- oder Ringredundanz-Protokoll übermittelt.

Darüber hinaus werden innerhalb der die Teilnetze 101, 102, 2 koppelnden Kommunikationsgeräte 201-203 die Kommunikationsgeräteanschlüsse 212, 214, 223, 224, 231, 233 der zweiten Anschlußgruppe jeweils mit einem Kommunikationsgeräteanschluß 211, 221 einer der beiden ersten Anschlußgruppen 101, 102 verbunden, der für eine Kommunikationsverbindung zum Wurzel-Netzknoten des jeweiligen ersten Teilnetzes 101, 102 unter den Kommunikationsgeräteanschlüssen der jeweiligen ersten Anschlußgruppe die geringsten Pfadkosten aufweist. Dabei werden nur die Kommunikationsgeräteanschlüsse 214, 223, 224, 231, 233 der zweiten Anschlußgruppe mit dem Kommunikationsgeräteanschluß 211, 221 der jeweiligen ersten Anschlußgruppe 101, 102 wirksam verbunden, die sich in einem Zustand befinden, in dem empfangene Nachrichten innerhalb des zweiten Teilnetzes 2 weitergeleitet werden. Auf den Kommunikationsgeräteanschluß 212 trifft dies beispielsweise nicht zu, da er zur Vermeidung einer Schleifenverbindung innerhalb des zweiten Teilnetzes mittels eines dem Kommunikationsgerät 201 zugeordneten Redundanz-Managers in einen Zustand versetzt ist, in dem eine Weiterleitung von empfangenen Nachrichten blockiert ist.

Im vorliegenden Ausführungsbeispiel wird angenommen, daß der Kommunikationsgeräteanschluß 222 als Reserveanschluß für den Kommunikationsgeräteanschluß 221 zunächst in einen Zustand versetzt ist, in dem eine Weiterleitung von empfangenen Nachrichten blockiert ist, und daß der Kommunikationsgeräteanschluß 232 höhere Pfadkosten zum Wurzel-Netzknoten des ersten Teilnetzes 102 aufweist als der Kommunikationsgeräteanschluß 221. Aus diesem Grund wird der Kommunikationsgeräteanschluß 221 mit dem zweiten Teilnetz 2 verbunden.

Darüber hinaus werden die Kommunikationsgeräteanschlüsse 212, 214, 223, 224, 231, 233 der zweiten Anschlußgruppe innerhalb eines Kommunikationsgeräts 201-203 mit einem Kommunikationsgeräteanschluß 213, 234 verbunden, an dem lediglich ein Kommunikationsendgerät angeschlossen ist. Dies trifft im vorliegenden Ausführungsbeispiel auf die beiden Kommunikationsgeräteanschlüsse 213, 234 zu, die jeweils mit einem Rechner 301, 302 verbunden sind. Wie bereits in bezug auf die Kommunikationsgeräteanschlüsse 211, 221 der ersten Teilnetze 101, 102 werden bei dem in Figur 1 dargestellten Szenario nur die Kommunikationsgeräteanschlüsse 214, 223, 224, 231, 233 der zweiten Anschlußgruppe mit den Kommunikationsgeräteanschlüssen 213, 234 wirksam verbunden, die sich in einem Zustand befinden, in dem empfangene Nachrichten innerhalb des zweiten Teilnetzes 2 weitergeleitet werden.

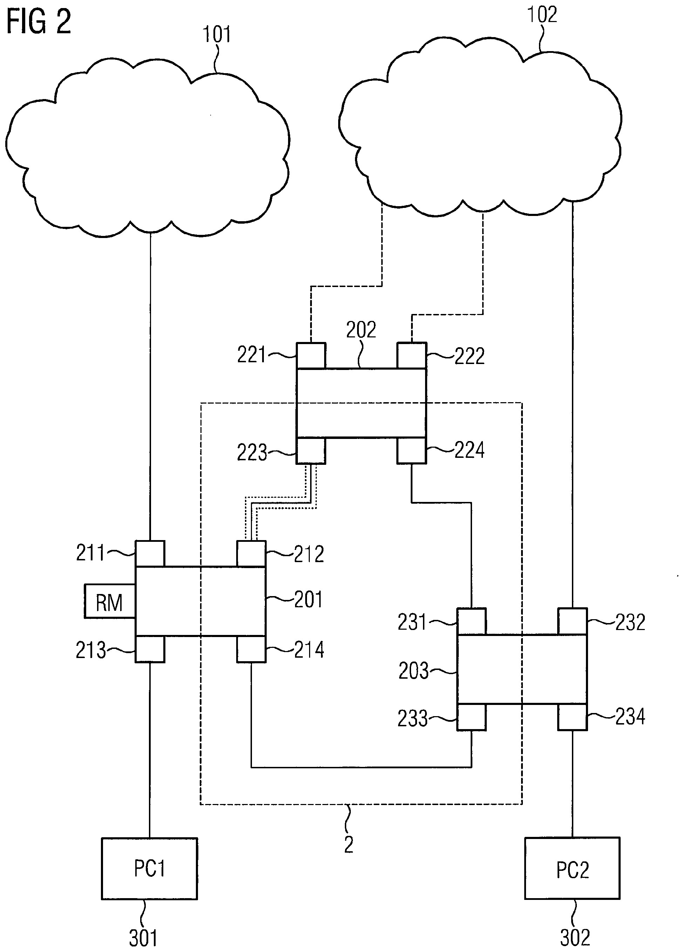

Ein Ausfall eines einem Netzknoten des zweiten Teilnetzes zugeordneten Kommunikationsgeräteanschlusses oder einer Verbindung zwischen zwei Netzknoten des zweiten Teilnetzes wird bevorzugt ausschließlich entsprechend dem Parallel- oder Ringredundanz-Protokoll behandelt. Kommt es gegenüber dem Szenario gemäß in Figur 1 beispielsweise zu einer in Figur 2 dargestellten Topologieänderung im ersten Teilnetz 102, bei dem der Kommunikationsgeräteanschluß 221 in einen blockierten Zustand und der Kommunikationsgeräteanschluß 222 in einen weiterleitenden Zustand versetzt werden, sind die beiden Kommunikationsgeräteanschlüsse 221, 222 vom zweiten Teilnetz 2 getrennt, falls der Kommunikationsgeräteanschluß 232 die geringsten Pfadkosten zum Wurzel-Netzknoten des ersten Teilnetzes 102 aufweist. In diesem Fall wird der Kommunikationsgeräteanschluß 232 über die Kommunikationsgeräteanschlüsse 231, 233 mit dem zweiten Teilnetz verbunden.

Innerhalb des zweiten Teilnetzes 2 werden Nachrichten mit Topologieinformationen der beiden ersten Teilnetze 101, 102 entsprechend dem Parallel- oder Ringredundanz-Protokoll austauschen, mit lokal vorliegenden Topologieinformationen der ersten Teilnetze 101, 102 vergleichen und in Abhängigkeit von einem Vergleichsergebnis resultierende Topologieinformationen ermittelt. Anhand der ermittelten resultierenden Topologieinformationen der ersten Teilnetze 101, 102 passen die Kommunikationsgeräte 201-203 ihre Konfiguration hinsichtlich geschlossener bzw. geöffneter Verbindungen zu den ersten Teilnetzen 101, 102 an. Vorteilhafterweise werden auch die Pfadkosten zum jeweiligen Wurzel-Netzknoten der beiden ersten Teilnetze 101, 102 anhand der resultierenden Topologieinformationen ermittelt.

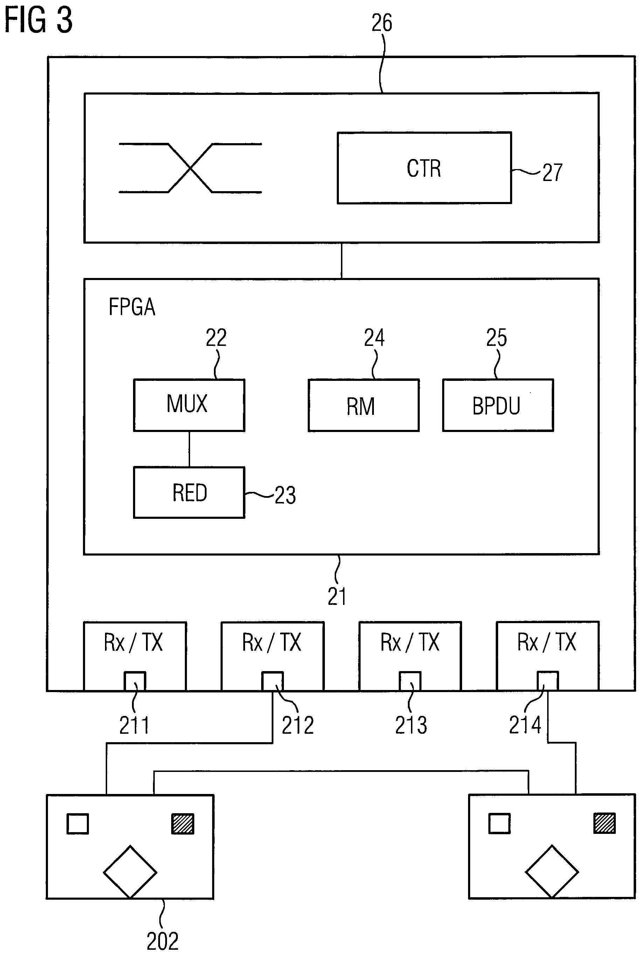

In Figur 3 ist das Kommunikationsgerät 201, das einem Netzknoten des zweiten Teilnetzes 2 zugeordnet ist und in einer Ringstruktur mit den Kommunikationsgeräten 202-203 verbunden ist, näher dargestellt. Grundsätzlich können auch die übrigen Kommunikationsgeräte 202-203 des zweiten Teilnetzes 2 identisch aufgebaut sein. Ein Kommunikationsgerät kann beispielsweise einem SCADA-System (supervisory control and data acquisition) eines industriellen Fertigungs- oder Prozeßautomatisierungssystems zugeordnet sein.

Als Mittel zur Nachrichtenübermittlung innerhalb der beiden ersten Teilnetze 101, 102 und innerhalb des zweiten Teilnetzes 2 umfaßt das Kommunikationsgerät 201 mehrere Sende- und Empfangseinheiten, welche die Kommunikationsgeräteanschlüsse 211-214 umfassen und mit einer Signalverarbeitungseinheit 21 verbunden sind. Die dem Kommunikationsgeräteanschluß 211 zugeordnete Sende- und Empfangseinheit dient insbesondere als Mittel zum Austausch von Topologieinformationen innerhalb des ersten Teilnetzes 101 zur Bildung einer Baumtopologie.

Die Signalverarbeitungseinheit ist vorzugsweise mittels eines Field Programmable Gate Arrays (FPGA) realisiert und umfaßt eine Multiplexereinheit 22 für eine Nachrichtenübermittlung entsprechend einem stoßfreien Parallel- oder Ringredundanz-Protokoll, einen Redundanz-Manager 24 für eine Nachrichtenübermittlung entsprechend einem stoßbehafteten Medien- oder Ringredundanz-Protokoll und eine Verarbeitungseinheit 25 für Topologieinformationen der beiden ersten Teilnetze 101, 102. Diese Topologieinformationen können insbesondere durch Bridge Protocol Data Units (BPDU) umfaßt sein.

Die Multiplexereinheit 22 ist mit einer Redundanzbehandlungseinheit 23 verbunden und dient zur parallelen Weiterleitung zu sendender Nachrichten an zwei Kommunikationsgeräteanschlüsse, die für eine Nachrichtenübermittlung entsprechend einem stoßfreien Parallel- oder Ringredundanz-Protokoll vorgesehen sind. Die Redundanzbehandlungseinheit 23 dient zur Detektion und Verarbeitung von über diese Kommunikationsgeräteanschlüsse empfangenen redundanten Nachrichten entsprechend einem stoßfreien Parallel- oder Ringredundanz-Protokoll.

Der Redundanz-Manager 24 detektiert bei einer Nachrichtenübermittlung entsprechend einem stoßbehafteten Medien- oder Ringredundanz-Protokoll eine Unterbrechung innerhalb einer Ringtopologie anhand versendeter Test-Datenpakete. Außerdem steuert der Redundanz-Manager 24 eine Weiterleitung von Nachrichten mit Nutzdaten, die über den Kommunikationsgeräteanschluß 212 empfangen werden, an den Kommunikationsgeräteanschluß 214 bzw. umgekehrt, beispielsweise entsprechend Media Redundancy Protocol oder einem funktionell vergleichbaren Kommunikationsprotokoll.

Als weiteres Mittel zur Nachrichtenübermittlung innerhalb der beiden ersten Teilnetze 101, 102 und des zweiten Teilnetzes 2 umfaßt das Kommunikationsgerät ein mit der Signalverarbeitungseinheit 21 verbundenes Koppelelement 26. Im vorliegenden Ausführungsbeispiel ist das Koppelelement 26 ein Backplane Switch mit zugeordnetem Controller 27. Alternativ hierzu kann das Koppelelement 26 grundsätzlich auch mittels eines Matrix-Schaltnetzes realisiert sein.

Außerdem umfaßt das in Figur 3 dargestellte Kommunikationsgerät 201 Mittel zur Einrichtung von ersten und zweiten Anschlußgruppen für erste und zweite Teilnetze. Diese Mittel sind im vorliegenden Ausführungsbeispiel durch den Controller 27 des Koppelelements 26 realisiert. Zusätzlich dient der Controller als Mittel zur Verbindung der Kommunikationsgeräteanschlüsse der zweiten Anschlußgruppe mit einem Kommunikationsgeräteanschluß einer ersten Anschlußgruppe vorgesehen, der für eine Kommunikationsverbindung zum Wurzel-Netzknoten des jeweiligen ersten Teilnetzes unter den Kommunikationsgeräteanschlüssen der ersten Anschlußgruppe die geringsten Pfadkosten aufweist.

Die Merkmale der vorangehend beschriebenen Ausführungsbeispiele können sowohl einzeln als auch in beschriebener Kombination miteinander realisiert sein.

## Patentansprüche

1. Verfahren zur Nachrichtenübermittlung in einem redundant betreibbaren industriellen Kommunikationsnetz, bei dem
- Nachrichten in zumindest einem ersten Teilnetz (101, 102) mit Baumtopologie entsprechend einem Spannbaum-Protokoll übermittelt werden, wobei das Spannbaum-Protokoll das Spanning Tree Protocol, Rapid Spanning Tree Protocol oder Multiple Spanning Tree Protocol ist,
- Netzknoten des ersten Teilnetzes zugeordnete Kommunikationsgeräte zur Bildung einer Baumtopologie untereinander Nachrichten mit Topologieinformationen austauschen und anhand der ausgetauschten Topologieinformationen ein Wurzel-Netzknoten als Basiselement einer Baumtopologie durch die den Netzknoten des ersten Teilnetzes zugeordneten Kommunikationsgeräte ermittelt wird, wobei vom Wurzel-Netzknoten ausgehend schleifenfreie Verbindungen zu den übrigen Netzknoten des ersten Teilnetzes aufgebaut werden und die Nachrichten mit Topologieinformationen des ersten Teilnetzes Bridge Protocol Data Units sind,
- Nachrichten in einem zweiten Teilnetz (2) entsprechend einem Parallel- oder Ringredundanz-Protokoll übermittelt werden, und
- das erste und das zweite Teilnetz über eine Mehrzahl von Kommunikationsgeräten (201-203) miteinander gekoppelt sind,
**dadurch gekennzeichnet, dass**
- das Parallel- oder Ringredundanz-Protokoll das Parallel Redundancy Protocol, High-availability Seamless Redundancy-Protokoll oder Media Redundancy Protocol ist,
- für die das erste und das zweite Teilnetz koppelnden Kommunikationsgeräte eine erste und eine zweite Anschlußgruppe eingerichtet werden, wobei Kommunikationsgeräteanschlüsse (211, 221, 222, 232) der ersten Anschlußgruppe für eine Nachrichtenübermittlung entsprechend dem Spannbaum-Protokoll innerhalb des ersten Teilnetzes verwendet werden, und wobei Kommunikationsgeräteanschlüsse (212, 214, 223, 224, 231, 233) der zweiten Anschlußgruppe für eine Nachrichtenübermittlung entsprechend dem Parallel- oder Ringredundanz-Protokoll innerhalb des zweiten Teilnetzes verwendet werden,
- innerhalb eines das erste und das zweite Teilnetz koppelnden Kommunikationsgeräts die Kommunikationsgeräteanschlüsse der zweiten Anschlußgruppe mit einem Kommunikationsgeräteanschluß der ersten Anschlußgruppe verbunden werden, der für eine Kommunikationsverbindung zum Wurzel-Netzknoten des ersten Teilnetzes unter den Kommunikationsgeräteanschlüssen der ersten Anschlußgruppe die geringsten Pfadkosten aufweist,
- die Nachrichten mit Topologieinformationen des ersten Teilnetzes jeweils einen Port Priority Vector umfassen, der unter den Netzknoten des zweiten Teilnetzes zugeordneten Kommunikationsgeräten ausgetauscht und abgeglichen wird.

2. Verfahren nach Anspruch 1,
bei dem innerhalb eines das erste und das zweite Teilnetz koppelnden Kommunikationsgeräts nur die Kommunikationsgeräteanschlüsse der zweiten Anschlußgruppe mit dem Kommunikationsgeräteanschluß der ersten Anschlußgruppe verbunden werden, die sich in einem Zustand befinden, in dem empfangene Nachrichten innerhalb des zweiten Teilnetzes weitergeleitet werden.

3. Verfahren nach einem der Ansprüche 1 oder 2,
bei dem innerhalb eines das erste und das zweite Teilnetz koppelnden Kommunikationsgeräts die Kommunikationsgeräteanschlüsse der zweiten Anschlußgruppe mit einem Kommunikationsgeräteanschluß verbunden werden, an dem lediglich ein Kommunikationsendgerät angeschlossen ist.

4. Verfahren nach einem der Ansprüche 1 bis 3,
bei dem innerhalb eines das erste und das zweite Teilnetz koppelnden Kommunikationsgeräts nur die Kommunikationsgeräteanschlüsse der zweiten Anschlußgruppe mit dem Kommunikationsgeräteanschluß für das Kommunikationsendgerät verbunden werden, die sich in einem Zustand befinden, in dem empfangene Nachrichten innerhalb des zweiten Teilnetzes weitergeleitet werden.

5. Verfahren nach einem der Ansprüche 1 bis 4,
bei dem die erste und die zweite Anschlußgruppe jeweils durch Bildung einen lokalen virtuellen Netzes eingerichtet werden.

6. Verfahren nach einem der Ansprüche 1 bis 5,
bei dem ein Ausfall eines einem Netzknoten des zweiten Teilnetzes zugeordneten Kommunikationsgeräteanschlusses oder einer Verbindung zwischen zwei Netzknoten des zweiten Teilnetzes ausschließlich entsprechend dem Parallel- oder Ringredundanz-Protokoll behandelt wird.

7. Verfahren nach einem der Ansprüche 1 bis 6,
bei dem Nachrichten in einem weiteren ersten Teilnetz mit Baumtopologie entsprechend einem Spannbaum-Protokoll übermittelt werden, und bei dem das weitere erste und das zweite Teilnetz über eine Mehrzahl von Kommunikationsgeräten miteinander gekoppelt sind, und bei dem für die das weitere erste und zweite Teilnetz koppelnden Kommunikationsgeräte eine weitere Anschlußgruppe eingerichtet wird, wobei Kommunikationsgeräteanschlüsse der weiteren Anschlußgruppe für eine Nachrichtenübermittlung entsprechend dem Spannbaum-Protokoll innerhalb des weiteren ersten Teilnetzes verwendet werden, und bei dem innerhalb eines das weitere erste und das zweite Teilnetz koppelnden Kommunikationsgeräts die Kommunikationsgeräteanschlüsse der zweiten Anschlußgruppe mit einem Kommunikationsgeräteanschluß der weiteren Anschlußgruppe verbunden werden, der für eine Kommunikationsverbindung zum Wurzel-Netzknoten des weiteren ersten Teilnetzes unter den Kommunikationsgeräteanschlüssen der weiteren Anschlußgruppe die geringsten Pfadkosten aufweist.

8. Verfahren nach einem der Ansprüche 1 bis 7,
bei dem die den Netzknoten des zweiten Teilnetzes zugeordneten Kommunikationsgeräte untereinander Nachrichten mit Topologieinformationen des zumindest einen ersten Teilnetzes untereinander entsprechend dem Parallel- oder Ringredundanz-Protokoll austauschen, mit lokal vorliegenden Topologieinformationen des zumindest einen ersten Teilnetzes vergleichen und in Abhängigkeit von einem Vergleichsergebnis resultierende Topologieinformationen des zumindest einen ersten Teilnetzes ermitteln.

9. Verfahren nach Anspruch 8,
bei dem die den Netzknoten des zweiten Teilnetzes zugeordneten Kommunikationsgeräte anhand der ermittelten resultierenden Topologieinformationen des zumindest einen ersten Teilnetzes ihre Konfiguration hinsichtlich geschlossener und/oder geöffneter Verbindungen zum zumindest einen ersten Teilnetz anpassen.

10. Verfahren nach einem der Ansprüche 8 oder 9,
bei dem die Pfadkosten zum jeweiligen Wurzel-Netzknoten des zumindest einen ersten Teilnetzes anhand der resultierenden Topologieinformationen ermittelt werden.

11. Verfahren nach einem der Ansprüche 1 bis 10,
bei dem die Topologieinformationen des zumindest einen ersten Teilnetzes Angaben zu bestehenden Verbindungen zwischen Netzknoten des zumindest einen ersten Teilnetzes umfassen, und bei dem vom jeweiligen Wurzel-Netzknoten ausgehende schleifenfreie Verbindungen zu den übrigen Netzknoten des zumindest einen ersten Teilnetzes anhand einer Ermittlung minimaler Pfadkosten zum jeweiligen Wurzel-Netzknoten aufgebaut werden.

12. Verfahren nach einem der Ansprüche 1 bis 11,
bei dem Nachrichten zwischen dem zweiten Teilnetz zugeordneten Kommunikationsgeräteanschlüssen ausschließlich entsprechend dem Parallel- oder Ringredundanz-Protokoll übermittelt werden.

13. Verfahren nach einem der Ansprüche 1 bis 12,
bei dem die den Netzknoten des ersten und/oder zweiten Teilnetzes zugeordneten Kommunikationsgeräte Switches oder Bridges sind.

14. Kommunikationsgerät für ein redundant betreibbares industrielles Kommunikationsnetz, das zumindest ein erstes Teilnetz mit Baumtopologie sowie Nachrichtenübermittlung entsprechend einem Spannbaum-Protokoll, ein zweites Teilnetz mit Nachrichtenübermittlung entsprechend einem Parallel- oder Ringredundanz-Protokoll und eine Mehrzahl beide Teilnetze koppelnder Kommunikationsgeräte umfaßt,
wobei das Kommunikationsgerät
- Mittel zur Nachrichtenübermittlung (211-214, 26) innerhalb des zumindest einen ersten Teilnetzes (101, 102) entsprechend dem Spannbaum-Protokoll, wobei das Spannbaum-Protokoll das Spanning Tree Protocol, Rapid Spanning Tree Protocol oder Multiple Spanning Tree Protocol ist,
- Mittel (25) zum Austausch von Nachrichten mit Topologieinformationen, die für eine Ermittlung eines Wurzel-Netzknotens als Basiselement der Baumtopologie vorgesehen sind, innerhalb des ersten Teilnetzes zur Bildung einer Baumtopologie, wobei der Wurzel-Netzknoten einen Ausgangspunkt für einen Aufbau schleifenfreier Verbindungen zu den übrigen Netzknoten des ersten Teilnetzes bildet und die Nachrichten mit Topologieinformationen des ersten Teilnetzes Bridge Protocol Data Units sind, und
- Mittel (22, 23) zur Nachrichtenübermittlung innerhalb des zweiten Teilnetzes (2) entsprechend dem Parallel- oder Ringredundanz-Protokoll,
umfasst, wobei das Kommunikationsgerät **dadurch gekennzeichnet ist, dass**
- das Parallel- oder Ringredundanz-Protokoll das Parallel Redundancy Protocol, High-availability Seamless Redundancy-Protokoll oder Media Redundancy Protocol ist,
- dass das Kommunikationsgerät Mittel (27) zur Einrichtung zumindest einer ersten und einer zweiten Anschlußgruppe für das erste und das zweite Teilnetz umfasst, wobei Kommunikationsgeräteanschlüsse (211, 221, 222, 232) der ersten Anschlußgruppe für eine Nachrichtenübermittlung entsprechend dem Spannbaum-Protokoll innerhalb des ersten Teilnetzes vorgesehen sind und wobei Kommunikationsgeräteanschlüsse (212, 214, 223, 224, 231, 233) der zweiten Anschlußgruppe für eine Nachrichtenübermittlung entsprechend dem Parallel- oder Ringredundanz-Protokoll innerhalb des zweiten Teilnetzes vorgesehen sind,
- dass das Kommunikationsgerät Mittel (27) zur Verbindung der Kommunikationsgeräteanschlüsse der zweiten Anschlußgruppe mit einem Kommunikationsgeräteanschluß der ersten Anschlußgruppe umfasst, der für eine Kommunikationsverbindung zum Wurzel-Netzknoten des ersten Teilnetzes unter den Kommunikationsgeräteanschlüssen der ersten Anschlußgruppe die geringsten Pfadkosten aufweist,
- und dass die Nachrichten mit Topologieinformationen des ersten Teilnetzes jeweils einen Port Priority Vector umfassen, der unter den Netzknoten des zweiten Teilnetzes zugeordneten Kommunikationsgeräten ausgetauscht und abgeglichen wird.

15. Kommunikationsgerät nach Anspruch 14,
bei dem das Kommunikationsgerät derart eingerichtet und ausgestaltet ist, daß nur die Kommunikationsgeräteanschlüsse der zweiten Anschlußgruppe mit dem Kommunikationsgeräteanschluß der ersten Anschlußgruppe verbunden werden, die sich in einem Zustand befinden, in dem empfangene Nachrichten innerhalb des zweiten Teilnetzes weitergeleitet werden.

16. Kommunikationsgerät nach einem der Ansprüche 14 oder 15,
bei dem das Kommunikationsgerät derart eingerichtet und ausgestaltet ist, daß die Kommunikationsgeräteanschlüsse der zweiten Anschlußgruppe mit einem Kommunikationsgeräteanschluß verbunden werden, an dem lediglich ein Kommunikationsendgerät angeschlossen ist.

17. Kommunikationsgerät nach einem der Ansprüche 14 bis 16,
bei dem das Kommunikationsgerät derart eingerichtet und ausgestaltet ist, daß nur die Kommunikationsgeräteanschlüsse der zweiten Anschlußgruppe mit dem Kommunikationsgeräteanschluß für das Kommunikationsendgerät verbunden werden, die sich in einem Zustand befinden, in dem empfangene Nachrichten innerhalb des zweiten Teilnetzes weitergeleitet werden.

18. Kommunikationsgerät nach einem der Ansprüche 14 bis 17,
bei dem das Kommunikationsgerät derart eingerichtet und ausgestaltet ist, daß die erste und die zweite Anschlußgruppe jeweils durch Bildung einen lokalen virtuellen Netzes eingerichtet werden.

19. Kommunikationsgerät nach einem der Ansprüche 14 bis 18,
bei dem Mittel zur Behandlung eines Ausfalls eines einem Netzknoten des zweiten Teilnetzes zugeordneten Kommunikationsgeräteanschlusses oder einer Verbindung zwischen zwei Netzknoten des zweiten Teilnetzes ausschließlich entsprechend dem Parallel- oder Ringredundanz-Protokoll vorgesehen sind.

20. Kommunikationsgerät nach einem der Ansprüche 14 bis 19,
bei dem Mittel zum Austauschen von Nachrichten mit Topologieinformationen des ersten Teilnetzes mit Netzknoten des zweiten Teilnetzes zugeordneten weiteren Kommunikationsgeräten entsprechend dem Parallel- oder Ringredundanz-Protokoll vorgesehen sind.

21. Kommunikationsgerät nach Anspruch 20,
bei dem Mittel zum Vergleichen von ausgetauschten Nachrichten mit Topologieinformationen des ersten Teilnetzes mit lokal vorliegenden Topologieinformationen des ersten Teilnetzes und zum Ermitteln von resultierenden Topologieinformationen des ersten Teilnetzes in Abhängigkeit von einem Vergleichsergebnis vorgesehen sind, und bei dem Mittel zur Konfigurationsanpassung des Kommunikationsgeräts hinsichtlich geschlossener und/oder geöffneter Verbindungen zum ersten Teilnetz anhand der ermittelten resultierenden Topologieinformationen des ersten Teilnetzes vorgesehen sind.

22. Kommunikationsgerät nach einem der Ansprüche 20 oder 21,
bei dem das Kommunikationsgerät derart eingerichtet und ausgestaltet ist, daß die Pfadkosten zum jeweiligen Wurzel-Netzknoten des zumindest einen ersten Teilnetzes anhand der resultierenden Topologieinformationen ermittelt werden.

## Claims

1. Method for message transmission in a redundant industrial communication network, in which
- messages are transmitted in at least one first sub-network (101, 102) with tree topology in a way corresponding to a spanning tree protocol, wherein the spanning tree protocol is the Spanning Tree Protocol, Rapid Spanning Tree Protocol or Multiple Spanning Tree Protocol,
- communication devices assigned to network nodes of the first sub-network for forming a tree topology exchange messages with topology information with one another and, on the basis of the topology information exchanged, a root network node is determined as a basic element of a tree topology by the communication devices assigned to the network nodes of the first sub-network, wherein loop-free connections are constructed from the root network node to the other network nodes of the first sub-network and the messages with topology information of the first sub-network are bridge protocol data units,
- messages are transmitted in a second sub-network (2) in a way corresponding to a parallel or ring redundancy protocol, and
- the first sub-network and the second sub-network are coupled to one another by way of a plurality of communication devices (201-203),
**characterized in that**
- the parallel or ring redundancy protocol is the Parallel Redundancy Protocol, High-availability Seamless Redundancy Protocol or Media Redundancy Protocol,
- for the communication devices coupling the first sub-network and the second sub-network, a first terminal group and a second terminal group are set up, wherein communication device terminals (211, 221, 222, 232) of the first terminal group are used for a message transmission in a way corresponding to the spanning tree protocol within the first sub-network, and wherein communication device terminals (212, 214, 223, 224, 231, 233) of the second terminal group are used for a message transmission in a way corresponding to the parallel or ring redundancy protocol within the second sub-network,
- within a communication device coupling the first sub-network and the second sub-network, the communication device terminals of the second terminal group are connected to a communication device terminal of the first terminal group that has the lowest path costs for a communication connection to the root network node of the first sub-network among the communication device terminals of the first terminal group,
- the messages with topology information of the first sub-network respectively comprise a port priority vector, which is exchanged among the communication devices assigned to network nodes of the second sub-network and adjusted.

2. Method according to Claim 1,
in which, within a communication device coupling the first sub-network and the second sub-network, only the communication device terminals of the second terminal group that are in a state in which received messages within the second sub-network are passed on are connected to the communication device terminal of the first terminal group.

3. Method according to either of Claims 1 and 2,
in which, within a communication device coupling the first sub-network and the second sub-network, the communication device terminals of the second terminal group are connected to a communication device terminal at which only one communication end device is connected.

4. Method according to one of Claims 1 to 3,
in which, within a communication device coupling the first sub-network and the second sub-network, only the communication device terminals of the second terminal group that are in a state in which received messages within the second sub-network are passed on are connected to the communication device terminal for the communication end device.

5. Method according to one of Claims 1 to 4,
in which the first terminal group and the second terminal group are respectively set up by forming a local virtual network.

6. Method according to one of Claims 1 to 5,
in which a failure of a communication device terminal assigned to a network node of the second sub-network or of a connection between two network nodes of the second sub-network is handled exclusively in a way corresponding to the parallel or ring redundancy protocol.

7. Method according to one of Claims 1 to 6,
in which messages are transmitted in a further first sub-network with tree topology in a way corresponding to a spanning tree protocol, and in which the further first sub-network and the second sub-network are coupled to one another by way of a plurality of communication devices, and in which a further terminal group is set up for the communication devices coupling the further first sub-network and the second sub-network, wherein communication device terminals of the further terminal group are used for a message transmission in a way corresponding to the spanning tree protocol within the further first sub-network, and in which, within a communication device coupling the further first sub-network and the second sub-network, the communication device terminals of the second terminal group are connected to a communication device terminal of the further terminal group that has the lowest path costs for a communication connection to the root network node of the further first sub-network among the communication device terminals of the further terminal group.

8. Method according to one of Claims 1 to 7,
in which the communication devices assigned to the network nodes of the second sub-network exchange messages with topology information of the at least one first sub-network with one another in a way corresponding to the parallel or ring redundancy protocol, compare them with locally available topology information of the at least one first sub-network and determine in dependence on a result of the comparison resultant topology information of the at least one first sub-network.

9. Method according to Claim 8,
in which, on the basis of the determined resultant topology information of the at least one first sub-network, the communication devices assigned to the network nodes of the second sub-network adapt their configuration with regard to closed and/or open connections to the at least one first sub-network.

10. Method according to either of Claims 8 and 9,
in which the path costs to the respective root network node of the at least one first sub-network are determined on the basis of the resultant topology information.

11. Method according to one of Claims 1 to 10,
in which the topology information of the at least one first sub-network comprises details of existing connections between network nodes of the at least one first sub-network, and in which loop-free connections are constructed from the respective root network node to the other network nodes of the at least one first sub-network on the basis of a determination of minimal path costs to the respective root network node.

12. Method according to one of Claims 1 to 11,
in which messages are transmitted between communication device terminals assigned to the second sub-network in a way corresponding to the parallel or ring redundancy protocol.

13. Method according to one of Claims 1 to 12,
in which the communication devices assigned to the network nodes of the first and/or second sub-network are switches or bridges.

14. Communication device for a redundant industrial communication network, which comprises at least one first sub-network with tree topology and message transmission in a way corresponding to a spanning tree protocol, a second sub-network with message transmission in a way corresponding to a parallel or ring redundancy protocol and a plurality of communication devices coupling the two sub-networks,
wherein the communication device comprises
- means for message transmission (211-214, 26) within the at least one first sub-network (101, 102) in a way corresponding to the spanning tree protocol, wherein the spanning tree protocol is the Spanning Tree Protocol, Rapid Spanning Tree Protocol or Multiple Spanning Tree Protocol,
- means (25) for exchanging messages with topology information that are intended for a determination of a root network node as a basic element of the tree topology, within the first sub-network for forming a tree topology, wherein the root network node forms a starting point for construction of loop-free connections to the other network nodes of the first sub-network and the messages with topology information of the first sub-network are bridge protocol data units, and
- means (22, 23) for message transmission within the second sub-network (2) in a way corresponding to the parallel or ring redundancy protocol, wherein the communication device is **characterized in that**
- the parallel or ring redundancy protocol is the Parallel Redundancy Protocol, High-availability Seamless Redundancy Protocol or Media Redundancy Protocol,
- **in that** the communication device comprises means (27) for setting up at least one first terminal group and a second terminal group for the first sub-network and the second sub-network, wherein communication device terminals (211, 221, 222, 232) of the first terminal group are intended for a message transmission in a way corresponding to the spanning tree protocol within the first sub-network and wherein communication device terminals (212, 214, 223, 224, 231, 233) of the second terminal group are intended for a message transmission in a way corresponding to the parallel or ring redundancy protocol within the second sub-network,
- **in that** the communication device comprises means (27) for connecting the communication device terminals of the second terminal group to a communication device terminal of the first terminal group that has the lowest path costs for a communication connection to the root network node of the first sub-network among the communication device terminals of the first terminal group,
- and **in that** the messages with topology information of the first sub-network respectively comprise a port priority vector, which is exchanged among the communication devices assigned to network nodes of the second sub-network and adjusted.

15. Communication device according to Claim 14,
in which the communication device is set up and designed in such a way that only the communication device terminals of the second terminal group that are in a state in which received messages within the second sub-network are passed on are connected to the communication device terminal of the first terminal group.

16. Communication device according to either of Claims 14 and 15,
in which the communication device is set up and designed in such a way that the communication device terminals of the second terminal group are connected to a communication device terminal at which only one communication end device is connected.

17. Communication device according to one of Claims 14 to 16,
in which the communication device is set up and designed in such a way that only the communication device terminals of the second terminal group that are in a state in which received messages within the second sub-network are passed on are connected to the communication device terminal for the communication end device.

18. Communication device according to one of Claims 14 to 17,
in which the communication device is set up and designed in such a way that the first terminal group and the second terminal group are respectively set up by forming a local virtual network.

19. Communication device according to one of Claims 14 to 18,
in which means are provided for handling a failure of a communication device terminal assigned to a network node of the second sub-network or of a connection between two network nodes of the second sub-network exclusively in a way corresponding to the parallel or ring redundancy protocol.

20. Communication device according to one of Claims 14 to 19,
in which means are provided for exchanging messages with topology information of the first sub-network with further communication devices assigned to network nodes of the second sub-network in a way corresponding to the parallel or ring redundancy protocol.

21. Communication device according to Claim 20,
in which means are provided for comparing exchanged messages with topology information of the first sub-network with locally available topology information of the first sub-network and for determining resultant topology information of the first sub-network in dependence on a result of the comparison, and in which means are provided for adapting the configuration of the communication device with regard to closed and/or open connections to the first sub-network on the basis of the determined resultant topology information of the first sub-network.

22. Communication device according to either of Claims 20 and 21,
in which the communication device is set up and designed in such a way that the path costs to the respective root network node of the at least one first sub-network are determined on the basis of the resultant topology information.

## Revendications

1. Procédé de transmission de messages dans un réseau de communication industriel pouvant fonctionner de manière redondante, dans lequel
- on transmet des messages dans au moins un premier sous-réseau (101, 102) à topologie arborescente, conformément à un protocole d'arbre couvrant, le protocole d'arbre couvrant étant le spanning tree protocol, le rapid spanning tree protocol ou le multiple spanning tree protocol,
- des appareils de communication, affectés à des noeuds du premier sous-réseau, échangent, pour former une topologie arborescente, entre eux, des messages ayant des informations de topologie et, à l'aide des informations de topologie échangées, un noeud de réseau racine est déterminé comme élément de base d'une topologie arborescente par les appareils de communication affectés au noeud du premier sous-réseau, des liaisons sans boucle, à partir du noeud de réseau racine, étant établies vers les autres noeuds du premier sous-réseau et les messages, ayant des informations de topologie, du premier sous-réseau étant des bridge protocol data units,
- on transmet des messages dans une deuxième sous-réseau (2), conformément à un protocole parallèle ou à redondance en anneau,
- le premier et le deuxième sous-réseau sont couplés entre eux par une pluralité d'appareils (201 à 203) de communication,
**caractérisé en ce que**
- le protocole parallèle ou à redondance en anneau est le parallel redundancy protocol, le high availabilité seamless redundancy protocoll ou le média redundancy protocol,
- pour les appareils de communication couplant le premier et le deuxième sous-réseau, on agence un premier et un deuxième groupe de connexions des connexions (211, 221, 222, 232) d'appareils de communication du premier groupe de connexions étant utilisées pour une transmission de messages conformément au protocole à arbre couvrant au sein du premier sous-réseau, et des connexions (212, 214, 223, 224, 231, 233) d'appareils de communication du deuxième groupe de connexions étant utilisées pour une transmission de message, conformément au protocole parallèle ou à redondance en anneau au sein du deuxième sous-réseau,
- à l'intérieur d'un appareil de communication couplant le premier et le deuxième sous-réseaux, les connexions d'appareils de communication du deuxième groupe de connexions sont reliées à une connexion d'appareil de connexion du premier groupe de connexions, connexion qui a, pour une liaison de communication avec le noeud de réseau racine du premier sous-réseau, parmi les connexions d'appareil de communication du premier groupe de connexions, les coûts de trajet les plus petits,
- les messages ayant des informations de topologie du premier sous-réseau comprennent respectivement un port priority vector, qui est échangé et réglé entre les appareils de communication affectés aux noeuds du deuxième sous-réseau.

2. Procédé suivant la revendication 1,
dans lequel, dans un appareil de communication couplant le premier et le deuxième sous-réseaux, on ne relie que les connexions d'appareil de communication du deuxième groupe de connexions à la connexion d'appareil de communication du premier groupe de connexions, qui se trouve dans un état dans lequel les messages reçus sont acheminés dans le deuxième sous-réseau.

3. Procédé suivant l'une des revendications 1 ou 2,
dans lequel, dans un appareil de communication couplant le premier et le deuxième sous-réseaux, on relie les connexions d'appareil de communication du deuxième groupe de connexions à une connexion d'appareil de communication à laquelle est raccordé seulement un appareil terminal de communication.

4. Procédé suivant l'une des revendications 1 à 3,
dans lequel, dans un appareil de communication couplant le premier et le deuxième sous-réseaux, on ne relie que les connexions d'appareil de communication du deuxième groupe de connexions à la connexion d'appareil de communication pour l'appareil terminal de communication, qui se trouve dans un état dans lequel des messages reçus dans le deuxième sous-réseau sont acheminés.

5. Procédé suivant l'une des revendications 1 à 4,
dans lequel on agence le premier et le deuxième groupes de connexions respectivement en formant un réseau virtuel local.

6. Procédé suivant l'une des revendications 1 à 5,
dans lequel on traite une défaillance d'une connexion d'appareil de communication affectée à un noeud du deuxième sous-réseau ou d'une liaison entre deux noeuds du deuxième sous-réseau, exclusivement conformément au protocole parallèle ou à redondance en anneau.

7. Procédé suivant l'une des revendications 1 à 6,
dans lequel on transmet des messages dans un autre premier sous-réseau à topologie arborescente, conformément à un protocole d'arbre couvrant et dans lequel l'autre premier et le deuxième sous-réseaux sont couplés entre eux par une pluralité d'appareils de communication et dans lequel, pour les appareils de communication couplant l'autre premier et le deuxième sous-réseaux, on agence un autre groupe de connexions, des connexions d'appareil de communication de l'autre groupe de connexions étant utilisées pour une transmission de messages, conformément au protocole d'arbre couvrant, dans l'autre premier sous-réseau et dans lequel, dans un appareil de communication couplant l'autre premier et le deuxième sous-réseaux, on relie les connexions d'appareil de communication du deuxième groupe de connexions à une connexion d'appareil de communication de l'autre groupe de connexions, qui a, pour une liaison de communication avec le noeud de racine de l'autre premier sous-réseau, parmi les connexions d'appareil de communication du groupe de connexions, les coûts de trajet les plus petits.

8. Procédé suivant l'une des revendications 1 à 7,
dans lequel les appareils de communication, affectés aux noeuds du deuxième sous-réseau, échangent entre eux des messages ayant des informations de topologie du au moins un premier sous-réseau, conformément au protocole parallèle ou à redondance en anneau, les comparent à des informations de topologie présentes localement du au moins un premier sous-réseau et, en fonction d'un résultat de comparaison, déterminent des informations de topologie résultantes du au moins un premier sous-réseau.

9. Procédé suivant la revendication 8,
dans lequel les appareils de communication, affectés aux noeuds du deuxième sous-réseau, adaptent, à l'aide des informations de topologie résultantes déterminées du au moins un premier sous-réseau, sa configuration en ce qui concerne des liaisons fermées et/ou ouvertes au au moins un premier sous-réseau.

10. Procédé suivant l'une des revendications 8 ou 9,
dans lequel on détermine les coûts de trajet, vers le noeud de réseau racine du au moins un premier sous-réseau, à l'aide des informations de topologie résultantes.

11. Procédé suivant l'une des revendications 1 à 10,
dans lequel les informations de topologie du au moins un premier sous-réseau comprennent des indications sur les liaisons existantes entre des noeuds du au moins un premier sous-réseau et dans lequel des liaisons, sans boucle et partant du noeud de réseau racine vers les autres noeuds du au moins un premier sous réseau, sont établies à l'aide d'une détermination de coûts de trajet minimum vers le noeud de réseau racine.

12. Procédé suivant l'une des revendications 1 à 11,
dans lequel on transmet des messages entre des connexions d'appareil de communication affectées au deuxième sous-réseau, exclusivement conformément au protocole parallèle ou à redondance en anneau.

13. Procédé suivant l'une des revendications 1 à 12,
dans lequel les appareils de communication affectés aux noeuds du premier et/ou du deuxième sous-réseaux sont des switches ou des bridges.

14. Appareil de communication pour une réseau de communication industriel pouvant fonctionner de manière redondante, qui comprend au moins un premier sous-réseau à topologie arborescente ainsi qu'une transmission de messages, conformément à un protocole d'arbre couvrant, un deuxième sous-réseau à transmission de messages, conformément à un protocole parallèle ou à redondance en anneau, et une pluralité d'appareils de communication couplant les deux sous-réseaux,
dans lequel l'appareil de communication a
- des moyens pour transmettre (211 à 216, 26) des messages au sein du au moins un premier sous-réseau (101, 102), conformément au protocole d'arbre courant, le protocole d'arbre couvrant étant le spanning tree protocol, le rapid spanning tree protocol ou le multiple spanning tree protocol,
- des moyens (25) d'échange de messages ayant des informations de topologie, qui sont prévues pour déterminer un noeud de réseau racine comme élément de base de la topologie arborescente au sein du premier sous-réseau pour former une topologie arborescente, le noeud de réseau racine formant un point de départ pour un établissement de liaisons sans boucle vers les autres noeuds du premier sous-réseau et les messages ayant des informations de topologie du premier sous-réseau étant des bridge protocol data units et
- des moyens (22, 23) de transmission de messages au sein du deuxième sous-réseau (2), conformément au protocole parallèle ou à redondance en anneau,
l'appareil de communication étant **caractérisé en ce que**
- le protocole parallèle ou à redondance en anneau est le parallel redundancy protocol, le hig-availability seamless redundancy-protokoll ou le média redundancy protocol,
**en ce que** l'appareil de communication a
- des moyens (27) d'agencement d'au moins un premier et un deuxième groupes de connexions pour le premier et le deuxième sous-réseaux,
les connexions (211, 221, 222, 232) d'appareil de communication du premier groupe de connexions étant prévues pour une transmission de messages, conformément au protocole d'arbre couvrant au sein du premier sous-réseau et dans lequel des connexions (212, 214, 223, 224, 231, 233) d'appareil de communication du deuxième groupe de connexions sont prévues pour une transmission de messages, conformément au protocole parallèle ou à redondance en anneau, au sein du deuxième sous-réseau,
- **en ce que** l'appareil de communication comprend des moyens (27)de liaison des connexions d'appareil de communication du deuxième groupe de connexions à une connexion d'appareil de communication du premier groupe de connexions, qui a, pour une liaison de communication avec le noeud de réseau racine du premier sous-réseau, parmi les connexions d'appareils de communication du premier groupe de connexions, le coût de trajet le plus petit,
- et **en ce que** les messages ayant des informations de topologie du premier sous-réseau comprennent respectivement un port priority vector, qui est échangé et réglé entre des appareils de communication affectés aux noeuds du deuxième sous-réseau.

15. Appareil de communication suivant la revendication 14, dans lequel l'appareil de communication est agencé et conformé de manière à ce que seulement les connexions d'appareil de communication du deuxième groupe de connexions soient reliées à la connexion d'appareil de communication du premier groupe de connexions, qui se trouvent dans un état dans lequel des messages reçus au sein du deuxième sous-réseau sont acheminés.

16. Appareil de communication suivant l'une des revendications 14 ou 15,
dans lequel l'appareil de communication est agencé et conformé de manière à relier les connexions d'appareil de communication du deuxième groupe de connexions à une connexion d'appareil de communication à laquelle est raccordé seulement un appareil terminal de communication.

17. Appareil de communication suivant l'une des revendications 14 à 16,
dans lequel l'appareil de communication est agencé et conformé de manière à ne relier que les connexions d'appareil de communication du deuxième groupe de connexions à la connexion d'appareil de communication pour l'appareil terminal de communication, qui se trouvent dans un état dans lequel des messages reçus au sein du deuxième sous-réseau sont acheminés.

18. Appareil de communication suivant l'une des revendications 14 à 17,
dans lequel l'appareil de communication est agencé et conformé de manière à agencer le premier et le deuxième groupes de connexions respectivement en formant un réseau virtuel local.

19. Appareil de communication suivant l'une des revendications 14 à 18,
dans lequel il est prévu des moyens de traitement d'une défaillance d'une connexion d'appareil de communication affectée à un noeud du deuxième sous-réseau ou d'une liaison entre deux noeuds du deuxième sous-réseau, exclusivement conformément au protocole parallèle ou à redondance en anneau.

20. Appareil de communication suivant l'une des revendications 14 à 19,
dans lequel il est prévu des moyens d'échange de messages ayant des informations de topologie du premier sous-réseau avec d'autres appareils de communication affectés à des noeuds du deuxième sous-réseau, conformément au protocole parallèle ou à redondance en anneau.

21. Appareil de communication suivant la revendication 20,
dans lequel il est prévu des moyens de comparaison de messages échangés ayant des informations de topologie du premier sous-réseau à des informations de topologie présentes localement du premier sous-réseau et de détermination d'informations de topologie résultantes du premier sous-réseau en fonction d'un résultat de la comparaison et dans lequel il est prévu des moyens d'adaptation de la configuration de l'appareil de communication en ce qui concerne ses liaisons fermées et/ou ouvertes avec le premier sous-réseau, à l'aide des informations de topologie résultantes déterminées du premier sous-réseau.

22. Appareil de communication suivant l'une des revendications 20 ou 21,
dans lequel l'appareil de communication est agencé et conformé de manière à déterminer les coûts de trajet vers le noeud de réseau racine du au moins un premier sous-réseau, à l'aide des informations de topologie résultantes.
